# FASCICULE DE BREVET EUROPEEN

(11) **EP 0 501 078 B1**
(45) Date de publication et mention de la délivrance du brevet: **08.03.1995**
(21) Numéro de dépôt: 91403477.2
(22) Date de dépôt: 20.12.1991
(51) Int. Cl.: B60T 8/18, B60T 8/26, B60T 11/34

(54) **Ensemble hydraulique de transformation d'une pression d'un fluide de freinage**
Hydraulische Bremsdruckänderungseinheit
Hydraulic brake pressure transformation means

(30) Priorité: 28.02.1991 FR 9102391
(43) Date de publication de la demande: 02.09.1992
(73) Titulaire: ALLIEDSIGNAL EUROPE SERVICES TECHNIQUES, 93700 Drancy (FR)
(72) Inventeur: Levrai, Roland, F-93700 Drancy (FR)
(74) Mandataire: Bentz, Jean-Paul

(56) Documents cités:
- EP-A- 0 041 020
- DE-A- 3 602 864
- GB-A- 1 574 589

## Description

La présente invention concerne un ensemble hydraulique de transformation d'une pression d'un fluide de freinage disposé entre un maître-cylindre et un moteur de frein.

Un tel ensemble est généralement prévu pour équiper les roues arrière d'un véhicule et est destiné à réduire la pression du fluide de freinage dans les moteurs de frein des roues arrière par rapport à celle régnant dans les moteurs de frein des roues avant.

Ainsi, l'homme du métier cherche à obtenir un ensemble hydraulique formant valve respectant une courbe des pressions entrée/sortie la plus proche possible d'une courbe idéale en forme de parabole, cette parabole variant en outre avec la charge du véhicule ainsi équipé.

Un tel ensemble est donc généralement constitué par un compensateur asservi à la charge.

Les documents DE-A-3602863 et DE-A-3602864 décrivent par exemple de tels compensateurs pourvus d'un moyen additionnel pour modifier le point d'intervention du compensateur et le rapprocher de la courbe idéale. Cependant, il résulte de ces moyens que l'on obtient d'abord en pratique un point de coupure à la suite duquel la pression de sortie est stabilisée même lorsque la pression d'entrée augmente, puis une nouvelle augmentation de la pression de sortie proportionnelle à la pression d'entrée.

Ainsi, à moyenne pression d'entrée, la pression de sortie devient insuffisante par rapport à ce qu'elle pourrait être, ce qui a pour résultat un mauvais freinage des roues arrière, tandis qu'à forte pression d'entrée, la pression de sortie devient supérieure à ce qu'elle devrait être, ce qui est contraire à la sécurité du fait du risque important de blocage des roues arrière à ce moment.

La présente invention a pour but d'obvier à ces inconvénients et de rapprocher la courbe effective de la courbe idéale sans les effets pervers sus-mentionnés.

Selon l'invention, l'ensemble hydraulique comprend un compensateur conventionnel de freinage asservi à la charge du véhicule et un limiteur de pression connecté en série avec le compensateur conventionnel, ce limiteur étant disposé en aval du compensateur et ègalement asservi à la charge du véhicule.

Par asservissement approprié du compensateur et du limiteur, il est alors possible d'approcher la courbe idéale en fonction de la charge du véhicule.

L'invention sera mieux comprise et d'autres buts, avantages et caractéristiques de celle-ci apparaitront plus clairement à la lecture de la description qui suit de modes de réalisation préférés en relation avec deux planches de dessins sur lesquels :
- la figure 1 représente schématiquement en coupe un ensemble hydraulique conforme à l'invention selon un premier mode de réalisation ;
- la figure 2 représente schématiquement un ensemble hydraulique conforme à l'invention selon un deuxième mode de réalisation, et
- la figure 3 représente la courbe des pressions entrée/sortie dans deux cas de charge du véhicule.

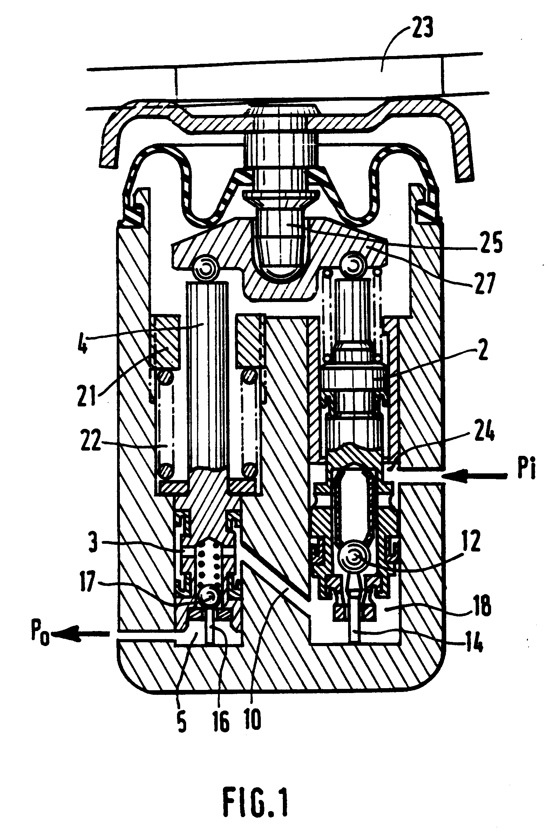

En référence maintenant à la figure 1, l'homme du métier reconnaîtra le moyen d'asservissement à la charge du véhicule qui est constitué par un levier 23 dont une extrémité non représentée est reliée à un point non suspendu du véhicule pour recevoir l'information de charge, une tige 25 s'appuyant sur un palonnier 27 pour exercer une pression sur un piston 2 d'un compensateur conventionnel (partie de droite de la figure) et sur un piston 4 d'un limiteur (partie de gauche de la figure).

Le piston 2 du compensateur porte un moyen de valve constitué, dans l'exemple représenté, par une aiguille 14 et une bille 12, disposé entre une chambre d'entrée 24 où est appliquée la pression Pi en provenance du maître-cylindre (non représenté) et une chambre de sortie 18.

Cette chambre de sortie 18 du compensateur est reliée, par un conduit 10, à la chambre d'entrée 3 du limiteur qui est donc disposé en aval du compensateur. Le limiteur comporte le piston 4 et une valve constituée par une aiguille 16 et une bille 17, disposée entre la chambre d'entrée 3 et la chambre de sortie 5 du limiteur. Cette dernière est connectée au moteur de frein associé (non représenté) qui reçoit la pression Po issue de l'ensemble hydraulique. Le limiteur comporte un ressort 22 précontraint au moyen d'une coupelle ajustable 21 et permettant de déterminer le point de coupure du limiteur au-dessus du point de coupure du compensateur.

Le fonctionnement de cet ensemble ne sera pas décrit ici en détail du fait qu'il est évident pour l'homme du métier. Le compensateur commence à agir à partir de son point d'intervention déterminé par la charge du véhicule. Le limiteur est transparent pour l'ensemble jusqu'à ce que la pression dans la chambre d'entrée 3 soit supérieure à son point de coupure. La pression de sortie Po de l'ensemble est alors stabilisée même si la pression d'entrée Pi augmente.

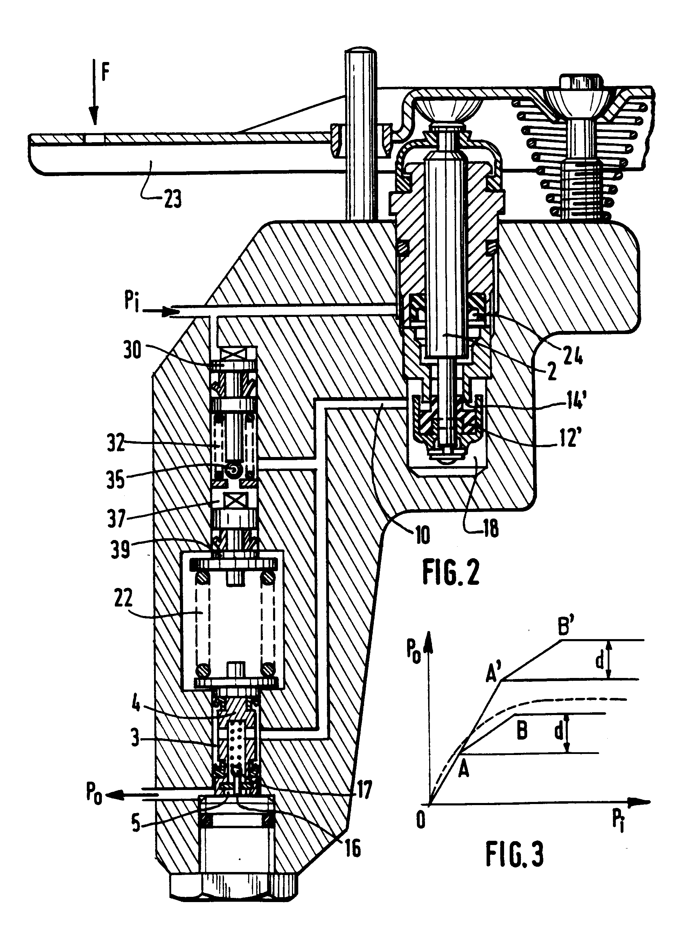

Dans le mode de réalisation représenté figure 1, l'information de charge du véhicule est directement appliquée au piston 4 du limiteur, ce qui n'est pas le cas du mode de réalisation représenté figure 2, selon lequel la différence des pressions de sortie entre le point de coupure du limiteur et le point d'intervention du compensateur est constante. Le limiteur est donc asservi au point d'intervention du compensateur.

Le compensateur comporte également un piston 2 auquel est appliquée l'information de la charge du véhicule par le levier 23 et un moyen de valve 12', 14' disposé entre la chambre d'entrée 24 et la chambre de sortie 18. Cette dernière est également connectée par un conduit 10 à la chambre d'entrée 3 du limiteur en série. Ce dernier comporte son piston 4 et le moyen de valve 16, 17 disposé entre la chambre d'entrée 3 et la chambre de sortie 5. Un ressort précontraint 22 détermine le point de coupure du limiteur.

La pression d'entrée Pi issue du maître-cylindre est également appliquée à l'une des faces d'un piston 30, et la pression de sortie du compensateur est appliquée à l'autre face de ce piston 30. Un ressort 32 rappelle au repos le piston 30 dans son alésage. Le piston 30 agit sur un clapet 35 susceptible de fermer une communication entre le conduit 10 relié à la chambre de sortie 18 du compensateur et une chambre dite de mémorisation 37. La précontrainte du ressort 32 est telle que le clapet 35 ferme la communication précitée à un niveau déterminé par rapport au point d'intervention du compensateur. Ainsi, dans la chambre de mémorisation 37 règne une pression fonction de ce point d'intervention, ce dernier variant selon la charge du véhicule.

La pression dans cette chambre 37 est appliquée à un piston 39 en appui sur le ressort 22 du limiteur et en module la précontrainte, ce qui a pour effet de déterminer le point de coupure du limiteur à un seuil de pression déterminé par rapport au point d'intervention du compensateur.

La figure 3 représente les courbes des pressions entrée/sortie d'un ensemble hydraulique tel que précédemment décrit pour deux états différents de charge du véhicule. La courbe en tirets est la courbe idéale pour une charge donnée. A partir du point d'intervention A, A' du compensateur, la pente de la courbe diminue et, à partir du point de coupure B, B' du limiteur, cette pente s'annule.

La pression de sortie Po de l'ensemble est donc parfaitement stabilisée, à pression d'entrée Pi élevée, à un seuil d déterminé du point d'intervention A de la pression d'entrée Pi, la valeur de ce seuil d étant indépendante de la charge du véhicule.

Bien qu'on ait décrit et représenté des modes préférés de réalisation de l'invention, l'homme du métier pourra y apporter de nombreuses modifications sans sortir du cadre défini par les revendications annexées.

## Revendications

1. Ensemble hydraulique de transformation d'une pression d'un fluide de freinage au moins partiellement asservi à la charge d'un véhicule et disposé entre un maître-cylindre et au moins un moteur de frein, le dit ensemble comprenant un compensateur de freinage conventionnel asservi à la charge du véhicule et étant caractérisé en ce qu'il comprend en outre un limiteur de pression connecté en série avec le dit compensateur conventionnel et disposé en aval du dit compensateur, et en ce que le dit limiteur est également asservi à la charge du véhicule.

2. Ensemble selon la revendication 1, caractérisé en ce que le dit limiteur est asservi au point d'intervention du dit compensateur.

3. Ensemble selon la revendication 2, caractérisé en ce qu'il comprend un moyen de mémorisation du dit point d'intervention.

4. Ensemble selon la revendication 3, caractérisé en ce que le dit moyen est constitué par un alésage dans lequel coulisse un piston (30) sur l'une des faces duquel est appliquée la pression délivrée par le maître-cylindre et sur l'autre face duquel est appliquée la pression de sortie du dit compensateur à laquelle s'ajoute la pression exercée par un ressort (32) pour déterminer un seuil de fonctionnement, le dit piston pilotant un clapet (35) venant fermer, lorsque le dit seuil est atteint, une communication entre une chambre de mémorisation (37) et un conduit de sortie (10) du dit compensateur, la pression régnant dans la chambre (37) venant moduler la précontrainte d'un ressort (22) déterminant la pression de coupure du dit limiteur.

## Claims

1. Hydraulic assembly for conversion of a pressure of a brake fluid at least partially controlled by the load of a vehicle and arranged between a master cylinder and at least one brake actuator, said assembly comprising a conventional braking compensator controlled by the load of the vehicle and being characterized in that it further comprises a pressure limiter connected in series with said conventional compensator and arranged downstream of said compensator, and in that said limiter is also controlled by the load of the vehicle.

2. Assembly according to Claim 1 characterized in that said limiter is controlled by the point of intervention of said compensator.

3. Assembly according to Claim 2 characterized in that it comprises a means for memorizing said point of intervention.

4. Assembly according to Claim 3 characterized in that said means is constituted by a bore in which slides a piston (30) on one of the faces of which is applied the pressure delivered by the master cylinder and on the other face of which is applied the output pressure from said compensator to which is added the pressure exerted by a spring (32) in order to determine a threshold of operation, said piston controlling a valve member (35) coming to close, when said threshold is reached, a communication between a memorizing chamber (37) and an outlet duct (10) from said compensator, the pressure existing in the chamber (37) modulating the prestressing of a spring (22) determining the cut-off pressure of said limiter.

## Patentansprüche

1. Hydraulische Baugruppe zur Transformation eines Drucks eines Bremsfluids, die wenigstens teilweise der Beladung eines Fahrzeugs nachgesteuert und zwischen einem Hauptzylinder und wenigstens einer Bremsbetätigungsvorrichtung angeordnet ist, wobei die Baugruppe eine herkömmliche, der Beladung des Fahrzeugs nachgesteuerte Bremsausgleichsvorrichtung aufweist und dadurch gekennzeichnet ist, daß sie außerdem einen Druckbegrenzer aufweist, der in Reihe mit der herkömmlichen Ausgleichsvorrichtung angeschlossen und hinter der Ausgleichsvorrichtung angeordnet ist, und daß der Begrenzer ebenfalls der Beladung des Fahrzeugs nachgesteuert ist.

2. Baugruppe nach Anspruch 1, dadurch gekennzeichnet, daß der Begrenzer dem Eingriffspunkt der Ausgleichsvorrichtung nachgesteuert ist.

3. Baugruppe nach Anspruch 2, dadurch gekennzeichnet, daß sie ein Mittel zum Speichern des Eingriffspunkts aufweist.

4. Baugruppe nach Anspruch 3, dadurch gekennzeichnet, daß das Mittel durch eine Bohrung gebildet ist, in der ein Kolben (30) gleitet, an dessen eine Seite der von dem Hauptzylinder bereitgestellte Druck und an dessen andere Seite der Druck am Ausgang der Ausgleichsvorrichtung angelegt ist, zu welchem sich der von einer Feder (32) zum Bestimmen einer Betriebsschwelle ausgeübte Druck hinzuaddiert, wobei der Kolben ein Ventilelement (35) steuert, welches beim Erreichen der Schwelle eine Verbindung zwischen einer Speicherkammer (37) und einer Ausgangsleitung (10) der Ausgleichsvorrichtung schließt, wobei der in der Kammer (37) herrschende Druck die Vorspannung einer Feder (22) moduliert, welche den Begrenzungsdruck des Begrenzers bestimmt.
